# DEMANDE DE BREVET EUROPEEN

(11) **EP 1 282 325 A1**
(43) Date de publication de la demande: **05.02.2003**
(21) Numéro de dépôt: 02077987.2
(22) Date de dépôt: 22.07.2002
(51) Int. Cl.: H04Q 7/38

(54) **Procédés de souscription entre un terminal et une station de base d'un système de télécommunications**

(30) Priorité: 31.07.2001 FR 0110248
(71) Demandeur: Koninklijke Philips Electronics N.V., 5621 BA Eindhoven (NL)
(72) Inventeur: Boucher, Pierre-Hugues, Société Civile S.P.I.D., 75008 Paris (FR)
(74) Mandataire: Chaffraix, Jean

(57) **Abrégé**

L'invention concerne un procédé de souscription d'un terminal auprès d'une station de base d'un système de télécommunications. Le procédé implique l'utilisation d'une entité de contrôle d'appel pour communiquer les informations adéquates entre le terminal et la station de base en vue d'une souscription, sans utiliser la procédure de mobility management prévue par la norme DECT.

Application : systèmes de télécommunication, téléphonie mobile.

## Description

L'invention concerne un émetteur, un récepteur et un procédé de souscription pour permettre l'accès d'un terminal à une station de base d'un système de télécommunications.

Elle concerne aussi un programme d'ordinateur pour mettre en oeuvre ledit procédé et un signal pour transporter ledit programme d'ordinateur.

L'invention a de nombreuses applications notamment dans les systèmes de transmissions sans fil.

Le document de normalisation publié par l'ETSI sous le numéro ETS 300 175-5 décrit une procédure de souscription entre un récepteur téléphonique portable et une station de base, appelée Mobility Management ou MM. Une procédure de souscription est indispensable dans un système comportant plusieurs terminaux ou plus généralement plusieurs émetteurs et/ou plusieurs récepteurs, pour contrôler l'accès des différents appareils au système et leur permettre de communiquer entre eux.

Un objet de l'invention est de fournir des moyens plus simples à mettre en oeuvre pour réaliser une souscription entre un terminal et une station de base.

Pour cela, il est prévu un procédé de souscription d'un terminal auprès d'une station de base, remarquables en ce qu'il comprend les étapes suivantes :
- une étape de contrôle pour autoriser le terminal à s'enregistrer auprès d'une station de base,
- une étape de sélection de canaux pour chercher un canal appartenant à une station de base autorisée,
- une première étape d'envoi d'un message vers la station de base sélectionnée contenant un identifiant dudit terminal,
- une deuxième étape d'envoi de messages contenant des informations codées prédéfinies,
- une première étape de réception d'un message contenant une information d'acceptation de souscription pour informer le terminal que la souscription est autorisée,
- une étape de stockage pour stocker un identifiant correspondant à l'identité de la station de base,
- une étape de réinitialisation pour réinitialiser le terminal .

il est également prévu un procédé pour autoriser une souscription d' un terminal auprès d'une station de base, comportant :
- Une étape d'initialisation pour permettre à la station de base d'entrer en mode souscription afin d'autoriser un terminal à s'enregistrer auprès d'elle,
- Une première étape de réception pour recevoir un message émis par le terminal et contenant un identifiant du terminal,
- Une deuxième étape de réception pour recevoir des messages transportant une information codée,
- Une étape de vérification pour vérifier si ladite information codée correspond à un terminal autorisé,
- Une étape d'émission pour émettre un message transportant une information d'acceptation de souscription pour informer le terminal que la souscription est autorisée,
- Une étape de stockage pour stocker ledit identifiant du terminal.

La description suivante, donnée à titre d'exemple non limitatif pour illustrer comment l'invention peut être réalisée, est faite en regard des dessins ci-annexés, parmi lesquels :
- la figure 1 est un schéma pour illustrer une procédure de souscription standard,
- la figure 2 est un schéma pour illustrer un exemple de procédé de souscription selon l'invention,
- la figure 3 est un schéma bloc fonctionnel pour illustrer un mode de réalisation matériel d'un récepteur téléphonique et d'une station de base selon l'invention,
- la figure 4 est un schéma fonctionnel pour illustrer un mode de réalisation logiciel d'un récepteur téléphonique et d'une station de base selon l'invention.

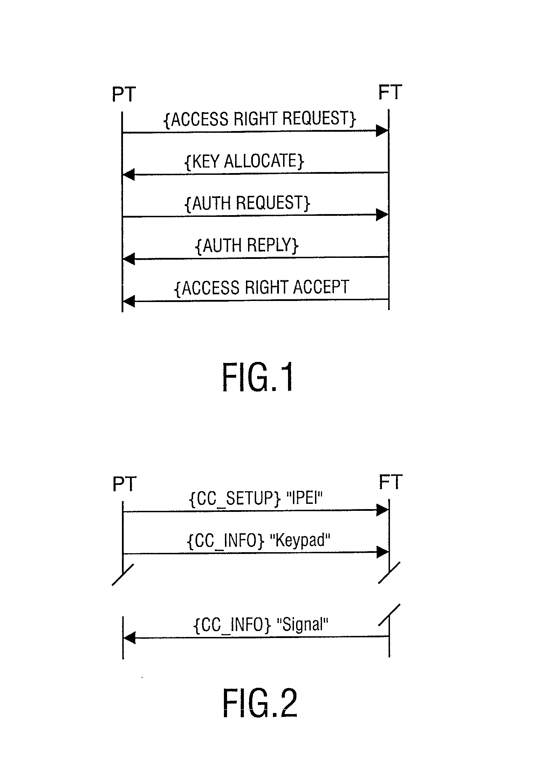

La figure 1 représente de manière simplifiée, les principaux échanges de messages effectués lors d'une procédure standard de souscription entre un terminal (PT) et une station de base (FT) dans un système de téléphonie sans fil du type DECT (de l'anglais Digital Enhanced Cordless Telecommunications). Selon cette procédure standard décrite aux paragraphes 5.6 et 13 dans le document de normalisation cité, le terminal mobile ou PT effectue une requête d'accès {ACCESS RIGHT REQUEST} à destination de la station de base ou FT. Le FT lui renvoie une allocation de clé {KEY ALLOCATE}. Le PT répond par une requête d'authentification {AUTH REQUEST}. Puis le FT, selon si le résultat de l'authentification est positif {AUTH REPLY} ou négatif {AUTH REJECT}, renvoie au PT un message {ACCESS RIGHT ACCEPT} lui signalant que la requête de souscription est acceptée par le FT.

La figure 2 représente, à titre d'exemple de réalisation, les principaux échanges de messages effectués lors d'un procédé de souscription selon l'invention pour enregistrer un terminal auprès d'une station de base sans utiliser la procédure standard décrite brièvement en référence à la figure 1. Selon cet exemple de réalisation, la procédure de souscription utilise une entité normalisée appelée Call Control ou CC, destinée à effectuer du contrôle d'appel en mode circuit. Cette entité ainsi que ses fonctionnalités sont décrites aux paragraphes 5.2, 6.3.2 et 9 dans le document de normalisation cité. Une autre entité peut également être utilisée à la place du CC. Il s'agit par exemple de l'entité appelée Connection Oriented Message Service ou COMS destinée à offrir un service de connexion point à point pour des communications en mode paquets. Ce service offre un établissement d'appel plus rapide et plus simple que l'entité CC. L'entité COMS est décrite dans le document cité, aux paragraphes 5.4, 6.3.4 et 11.

Dans l'exemple de réalisation représenté sur la figure 2, le procédé comprend les étapes suivantes.

Une étape d'initialisation côté FT permet au FT d'entrer en mode souscription pour autoriser un terminal à s'enregistrer auprès de lui, par exemple, lors du débranchement et du branchement du FT sur l'alimentation secteur, le mode souscription est déclenché sur un front montant de l'alimentation.

Une étape de contrôle prédéfinie côté PT permet de mettre le PT également en mode souscription, par exemple, à l'aide d'une séquence prédéfinie de touches à presser sur le clavier du terminal.

Une étape de sélection de canaux est prévue, lors de laquelle le PT cherche un canal appartenant à un FT en mode souscription.

Lorsqu'un FT en mode souscription est sélectionné, une indication est envoyé au PT pour lui demander quel type de souscription est requise, cette étape est utile dans le cas où plusieurs terminaux peuvent être enregistrés auprès d'une même station de base selon un type de souscription prédéfini.

La transaction peut alors démarrer au niveau de la couche réseau des deux appareils, par exemple, par l'envoi d'un message {CC_SETUP} du PT vers le FT contenant l'identifiant du PT, le CC du terminal demandant un service, appelé dans la norme, service call, qui transporte l'information d'identité du terminal c'est-à-dire son identifiant ou numéro de série ou "IPEI".

A la réception du message {CC_SETUP}, le FT entre dans un mode d'attente pour attendre un certain temps que des messages du type {CC_INFO} transportant une information codée "Keypad" lui soient envoyés par le PT. Les informations codées attendues concernent, par exemple, des numéros correspondant à des codes de touches composées sur le clavier du terminal. Ces numéros, qui sont stockés dans le FT, permettent au FT de détecter et de sélectionner le terminal comme lors de la procédure standard utilisant un code d'authentification de type AC (Authentication Code), mais sans utiliser la procédure standard d'allocation de clés ou Key Allocation.

Lorsque toutes les informations sont reçues, une vérification est faite au niveau du FT pour vérifier que ces codes correspondent à un terminal autorisé. Un autre message du type {CC_INFO} transportant une information "Signal" est alors envoyé au PT pour lui indiquer si la requête de souscription est acceptée ou non. Si elle est acceptée, c'est-à-dire que le code "keypad" reçu est correct, l'identifiant du terminal "IPEI" est stocké dans une mémoire du FT, par exemple dans une mémoire électriquement effaçable du type EEPROM. De son côté, le PT reçoit le message {CC_INFO} lui indiquant si sa requête est acceptée. Si c'est le cas, il stocke l'identifiant du FT "RFPI" qui est diffusé en continu sur le canal par le FT. Si le code reçu par le FT n'est pas correct, le FT lui envoie une information de rejet et le PT reprend la procédure au niveau de l'étape de recherche d'un canal appartenant à un FT en mode souscription.

Dans le cas ou la requête de souscription est acceptée, une réinitialisation est nécessaire de chaque côté pour prendre en compte les nouveaux paramètres stockés.

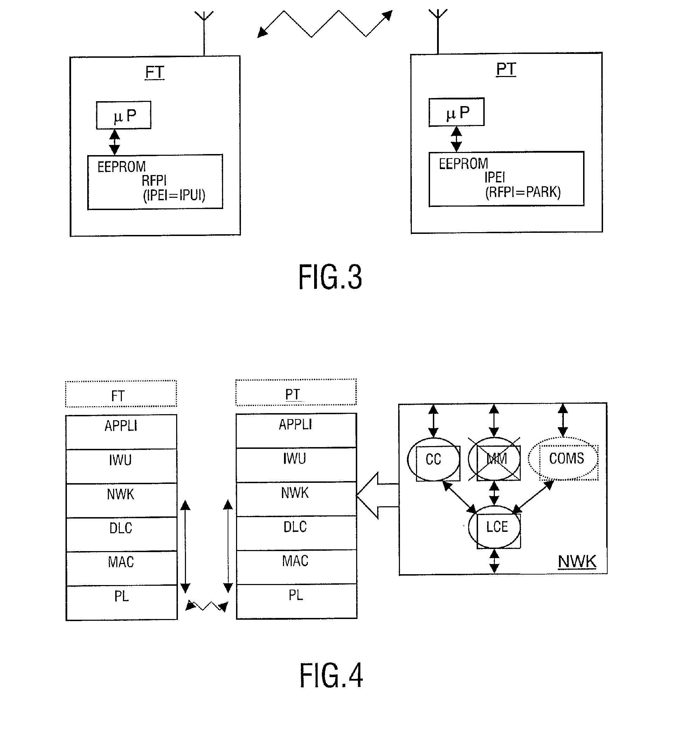

La figure 3 décrit un mode de réalisation d'un terminal téléphonique DECT (PT) et d'une station de base DECT (FT) selon l'invention. Chaque appareil, PT ou FT comprend une antenne d'émission réception pour recevoir des signaux radio électriques, un microprocesseur µP et une mémoire, par exemple de type EEPROM pour stocker les informations d'identité de chaque appareil. Lorsqu'elle est stockée dans le PT, l'information d'identité du FT ou RFPI devient une clé portable de droits d'accès ou PARK permettant l'accès à la station de base. Lorsqu'elle est stockée dans le FT, l'information d'identité du terminal ou IPEI devient un numéro d'identité portable international ou IPUI.

La figure 4 montre un mode de réalisation logiciel de l'invention. Le FT et le Pt sont représentés par les couches logicielles du protocole de communication utilisé pendant la transmission. Du haut vers le bas, on a :
- une couche d'application APPLI qui réalise une interface entre l'utilisateur et l'appareil, cette couche gère également des algorithmes permettant notamment de se connecter au réseau DECT,
- une couche d'interopérabilité IWU pour gérer les appels et les souscriptions,
- une couche réseau NWK dont les différents éléments sont détaillés sur la figure 4, ils comprennent les entités suivantes prévues dans la norme citée :

- une entité de contrôle d'appel CC,
- une entité de gestion de la mobilité MM,
- une entité qui fournit un service de connexion point à point pour des communications en mode paquets COMS,
- un routeur LCE, qui récupère les messages de la couche inférieure pour les diriger vers l'entité concernée,
- une couche d'intégrité DLC pour assurer l'intégrité des messages reçus,
- une couche de gestion de la couche physique MAC,
- et enfin la couche physique constituée de la partie radio DECT qui communique par voie radio avec les couches physiques des autres appareils.

L'invention n'utilise pas l'entité standard de gestion de la mobilité MM pour effectuer les souscriptions entre un PT et un FT. Elle utilise l'une des deux autres entités CC ou COMS.

## Revendications

1. Procédé de souscription d'un terminal auprès d'une station de base comportant :
- une étape de contrôle pour autoriser le terminal à s'enregistrer auprès d'une station de base,
- une étape de sélection de canaux pour chercher un canal appartenant à une station de base autorisée,
- une première étape d'envoi d'un message vers la station de base sélectionnée contenant un identifiant dudit terminal,
- une deuxième étape d'envoi de messages contenant des informations codées prédéfinies,
- une première étape de réception d'un message contenant une information d'acceptation de souscription pour informer le terminal que la souscription est autorisée,
- une étape de stockage pour stocker un identifiant correspondant à l'identité de la station de base,
- une étape de réinitialisation pour réinitialiser le terminal .

2. Procédé pour autoriser une souscription d' un terminal auprès d'une station de base, comportant :
- Une étape d'initialisation pour permettre à la station de base d'entrer en mode souscription afin d'autoriser un terminal à s'enregistrer auprès d'elle,
- Une première étape de réception pour recevoir un message émis par le terminal et contenant un identifiant du terminal,
- Une deuxième étape de réception pour recevoir des messages transportant une information codée,
- Une étape de vérification pour vérifier si ladite information codée correspond à un terminal autorisé,
- Une étape d'émission pour émettre un message transportant une information d'acceptation de souscription pour informer le terminal que la souscription est autorisée,
- Une étape de stockage pour stocker ledit identifiant du terminal.

3. Terminal comportant des moyens pour mettre en oeuvre un procédé selon la revendication 1.

4. Station de base comportant des moyens pour mettre en oeuvre un procédé selon la revendication 2.

5. Programme d'ordinateur comportant des instructions de code de programme pour mettre en oeuvre un procédé selon la revendication 1.

6. Programme d'ordinateur comportant des instructions de code de programme pour mettre en oeuvre un procédé selon la revendication 2.

7. Signal pour transporter un programme d'ordinateur selon la revendication 5.

8. Signal pour transporter un programme d'ordinateur selon la revendication 6.

9. Système comportant un terminal et une station de base selon les revendications 3 et 4.
